# EUROPEAN PATENT APPLICATION

(11) **EP 4 579 920 A1**
(43) Date of publication of application: **02.07.2025**
(21) Application number: 24764213.5
(22) Date of filing: 29.02.2024
(51) Int. Cl.: H01M 50/383, H01M 50/204, H01M 50/502, H01M 10/658

(54) **BATTERY MODULE HAVING FLAME EMISSION BLOCKING UNIT AND BATTERY PACK INCLUDING SAME**

(30) Priority: 02.03.2023 KR 20230028012
(71) Applicant: LG Energy Solution, Ltd., Seoul 07335 (KR)
(72) Inventor: HAN, Min-Hee, Daejeon 34122 (KR); KIM, Soo-Youl, Daejeon 34122 (KR); CHOI, Wan-Sup, Daejeon 34122 (KR); HAN, Seung-Won, Daejeon 34122 (KR); JUNG, Hye-Mi, Daejeon 34122 (KR)
(74) Representative: Plasseraud IP
(86) International application number: PCT/KR2024/002636
(87) International publication number: WO 2024/181814

(57) **Abstract**

A battery module according to the present disclosure may include: a module case; a plurality of battery cells accommodated inside the module case and arranged to be stacked in one direction; a bus-bar frame configured to support a bus-bar connected to electrode leads of the battery cells; and a flame emission blocking unit connected to the bus-bar frame and disposed on the plate surface of the bus-bar frame and the upper surface of the battery cells so as to block flame from being discharged to the front and rear surfaces of the battery cells, where the electrode leads are located, and/or the upper surface of the battery cells.

## Description

### TECHNICAL FIELD

The present disclosure relates to a battery module, and more specifically, it relates to a battery module in which a thermal barrier made of a flame-retardant material is applied to a bus-bar frame to block heat so that high-temperature gas, flame, sparks, and the like generated during the internal ignition of the battery module are guided to the bottom of the module, instead of to the bus-bar frame, for directional venting, thereby delaying thermal runaway.

The present application claims priority to Korean Patent Application No. 10-2023-0028012 filed on March 02, 2023 in the Republic of Korea, the disclosures of which are incorporated herein by reference.

### BACKGROUND ART

Semi-permanent batteries, which convert electrical energy into chemical energy and can be repeatedly charged and discharged, are called secondary batteries distinguished from primary batteries that cannot be reused after use.

Secondary batteries include lithium secondary batteries, nickel-cadmium (Ni-Cd) batteries, lead-acid batteries, nickel-metal hydrogen (Ni-MH) batteries, zinc-air batteries, and alkaline manganese batteries. Among these, lead-acid batteries and lithium secondary batteries are the most widely commercialized secondary batteries.

In particular, lithium secondary batteries have advantages such as high energy storage density, lightweight and miniaturized structures, excellent safety, a low discharge rate, and a long lifespan, so they are widely used as electric vehicle batteries nowadays. For reference, lithium secondary batteries are generally classified into cylindrical, prismatic, and pouch types depending on their manufacturing types, and their uses range from electric vehicle batteries to ESS batteries and other electrical devices.

Currently, the operating voltage of one lithium secondary battery cell is approximately 2.5V to 4.5V. Therefore, in order to apply secondary batteries to an energy source for electric vehicles, a plurality of lithium-ion battery cells are connected in series and/or parallel to produce a battery module, and then the battery modules are connected in series and/or parallel to produce a battery pack.

Meanwhile, since secondary batteries involve chemical reactions during charging and discharging, their performance may deteriorate when used at a temperature higher than an appropriate temperature, and failure of heat control to an appropriate temperature is likely to lead to unexpected ignition or explosion. In addition, since the battery module has a structure in which the secondary batteries are intensively stored inside a module housing, if a thermal event occurs in any one secondary battery, heat may transfer to an adjacent module or pack, leading to chain ignition or thermal runaway.

In particular, venting gases, flames, sparks, or the like generated during thermal runaway in a specific battery cell are likely to be ejected toward the front and rear surfaces of the battery cells, where the electrode leads of the relevant battery module are located, and/or the upper surface of the battery cell, which may cause thermal damage to components at both ends of the battery module, such as end plates or components adjacent to the bus-bar frame, and cause structural collapse.

In addition, flames discharged to the outside through the end plate may spread to adjacent battery modules, especially the end plate thereof, causing chain ignition and resulting in thermal runaway.

### DISCLOSURE

### Technical Problem

The present disclosure has been designed to solve the problems of the related art, and therefore the present disclosure is directed to providing a battery module capable of structurally blocking flame emitted toward the front and rear surfaces of the battery cells, where the electrode leads are located, and/or the upper surface of the battery cell, thereby minimizing thermal damage to components at both ends of the battery module and the end plates and preventing structural collapse, and capable of performing directional venting of flame to one side of the module, instead of to adjacent battery modules, thereby maximally delaying chain ignition or thermal runaway.

The technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery module including: a module case; a plurality of battery cells accommodated inside the module case and arranged to be stacked in one direction; a bus-bar frame configured to support a bus-bar connected to electrode leads of the battery cells; and a flame emission blocking unit connected to the bus-bar frame and disposed on a plate surface of the bus-bar frame and an upper surface of the battery cells so as to block flame from being discharged to the front and rear surfaces of the battery cells, where the electrode leads are located, and/or the upper surface of the battery cells.

The flame emission blocking unit may include: a frame cover member coupled to the bus-bar frame so as to face the same; and an upper cover member formed to be bent at the upper end of the bus-bar frame and configured to partially cover the upper surface of the battery cells.

The flame emission blocking unit may further include a pressing cover block configured to press and fix the frame cover member to the bus-bar frame.

The battery module may further include a heat barrier member provided between at least one or more battery cells in a stacking direction of the battery cells.

The bus-bar frame may have a plurality of through-slots formed at regular intervals corresponding to the heat barrier members, and the bus-bar frame may be coupled to the battery cells such that both ends of the heat barrier member are inserted into the through-slots.

A tip of the heat barrier member may be inserted into the bus-bar frame to form a protrusion partition portion protruding outward from the plate surface of the bus-bar frame, and the bus-bar frame may have a plurality of partition surfaces partitioned by the protrusion partition portions, and the frame cover member and the pressing cover block may be separated from each other and respectively provided to each of the partition surface.

The upper cover member may include: a coupling surface disposed in parallel to the plate surface of the bus-bar frame and coupled to the bus-bar frame; and a bent surface bent from the coupling surface to be disposed on an edge of the upper surface of the battery cells.

A folded reinforcement portion may be provided at an end of the bent surface.

The frame cover member may be a flame-retardant pad made of silicone or aerogel, and the upper cover member and the pressing cover block may be made of SUS.

The frame cover member may have a lead exposure hole through which the bus-bar is exposed to the outside, and an insulating layer may be coupled to the inner wall of the pressing cover block at a position corresponding to the lead exposure hole.

The bus-bar frame may include a holder portion configured to protrude outward from the edge of the partition surface to facilitate coupling between the frame cover member and the pressing cover block.

The pressing cover block may be press-fitted to the holder portion.

An inclined portion may be formed on the inner wall of the holder portion for press-fitting.

At least one reinforcement structure portion may be provided on a surface of the flame emission blocking unit, and the reinforcement structure portion may include: a protrusion rib provided on the pressing cover block; and a recess rib provided on the upper cover member.

According to another aspect of the present disclosure, there may be provided a battery pack including one or more battery modules described above.

### Advantageous Effects

According to one aspect of the present disclosure, it is possible to block flame or the like generated during a thermal event from being discharged toward the front and rear of battery cells, where the electrode leads are located, and/or the top of the battery cell, thereby minimizing thermal damage to components at both ends of the battery module and the end plates and preventing structural collapse.

In addition, according to one aspect of the present disclosure, it is possible to maximally delay chain ignition or thermal runaway to adjacent battery modules by performing directional venting to control the blocked flame to be discharged in a specific direction (e.g., downward) inside the battery module.

### DESCRIPTION OF DRAWINGS

FIG. 1 is a perspective view schematically illustrating a battery module according to an embodiment of the present disclosure.
FIG. 2 is an exploded perspective view of primary configuration of the battery module in FIG. 1.
FIG. 3 is a perspective view schematically illustrating the bus-bar frame coupled to the battery cells in FIG. 2.
FIG. 4 is a detailed exploded perspective view of FIG. 3, which illustrates the detailed configuration of a flame emission blocking unit connected to a bus-bar frame.
FIG. 5 is a schematically cross-sectional view of a bus-bar frame and a flame emission blocking unit in a battery module according to an embodiment of the present disclosure.
FIG. 6 is a schematically longitudinal cross-sectional view of a portion of a battery module according to an embodiment of the present disclosure.
FIG. 7 is a perspective view schematically illustrating a bus-bar frame according to another embodiment of the present disclosure.
FIG. 8 is a longitudinal cross-sectional view of a bus-bar frame and a flame emission blocking unit according to another embodiment of the present disclosure.
FIG. 9 is a diagram of a bus-bar frame and a flame emission blocking unit including a reinforcement structure portion according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

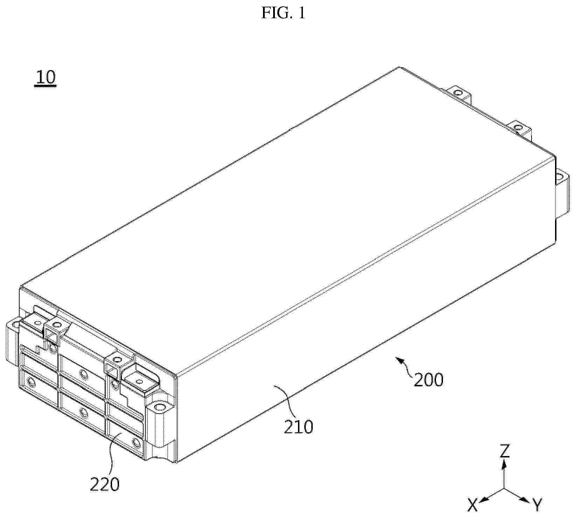

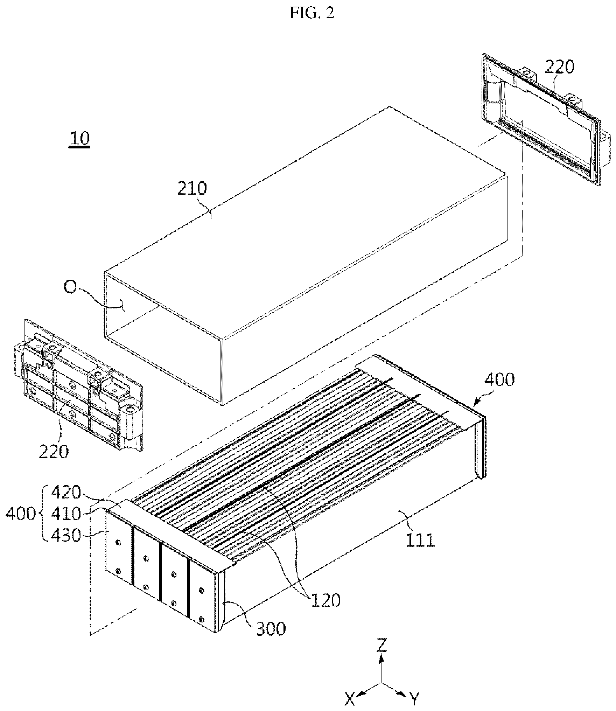

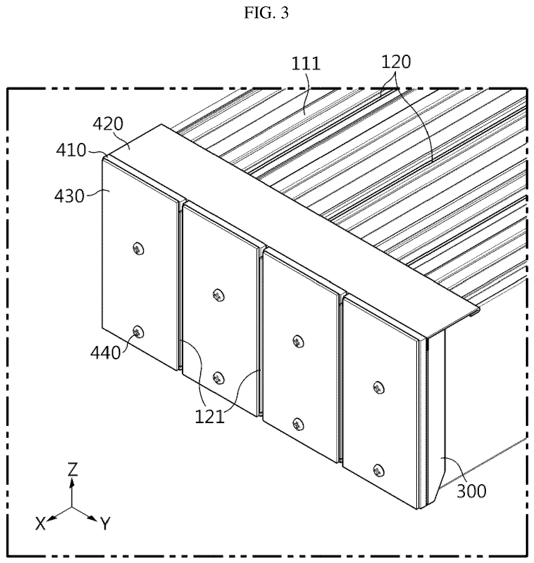

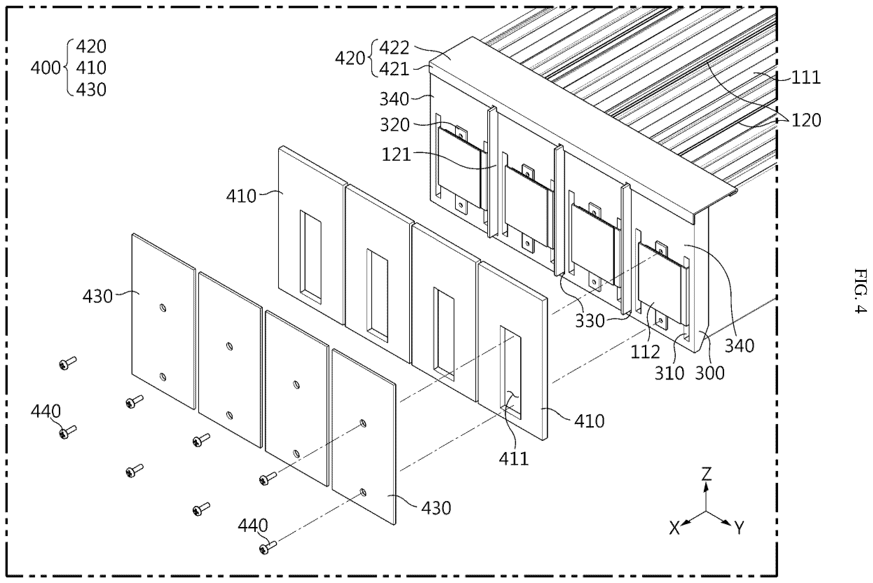

FIG. 1 is a perspective view schematically illustrating a battery module 10 according to an embodiment of the present disclosure, FIG. 2 is an exploded perspective view of primary configuration of the battery module in FIG. 1, FIG. 3 is a perspective view schematically illustrating the bus-bar frame coupled to the battery cells in FIG. 2, and FIG. 4 is a detailed exploded perspective view of FIG. 3, which illustrates the detailed configuration of the flame emission blocking unit connected to the bus-bar frame.

The battery module 10 according to an embodiment of the present disclosure, as shown in FIGS. 1 to 4, includes a module case 200, a plurality of battery cells 111 accommodated inside the module case 200 and arranged to be stacked in one direction, and a bus-bar frame 300 that supports a bus-bar 320 connected to the electrode leads 112 of the battery cells 111.

Referring to FIG. 4, the battery cell 111 includes an electrode assembly, a case accommodating the electrode assembly, and a pair of electrode leads 112 connected to the electrode assembly and extending to the outside of the case to function as electrode terminals. The pair of electrode leads 112 extends to both ends of the battery cell 111, that is, in the longitudinal direction (±X-axis direction).

If necessary, the battery cell 111 may have the electrode leads 112 located only at one end of the battery cell 110, for example, only at the end in the +X-axis direction. Meanwhile, the present disclosure is not limited to a specific type or form of battery cell 111, and various battery cells 111 known at the time of filing the present disclosure may be used to constitute the cell assembly of the present disclosure. Although the present disclosure will be described based on a pouch-type secondary battery that has high energy density and is easy to stack, a cylindrical or prismatic secondary battery may also be applied to the battery cell 111.

These battery cells 111 may be arranged to be stacked in at least one direction. In the present embodiment, referring to FIG. 2, the battery cells 111 may be arranged to be stacked in the horizontal direction (Y-axis direction in the drawing) while standing in the upward-downward direction (Z-axis direction in the drawing).

A heat barrier member 120 may be provided between the battery cells 111. The heat barrier member 120 may be interposed between the battery cells 111 at regular intervals (e.g., at each battery cell 111 or at each group of battery cells 111) in the stacking direction of the battery cells 111. The heat barrier member 120 may be in contact with both plate surfaces of at least some of the plurality of pouch-type battery cells 111. In the present embodiment, the heat barrier member 120 may be provided at a position corresponding to the through-slot 330 of the bus-bar frame 300 such that the heat barrier members 120 are disposed at least every two battery cells 111.

This heat barrier member 120 may be configured in the form of a pad with compressive force, which is made of a material with excellent heat resistance (e.g., silicone, aerogel, mica, or the like). Since the heat barrier member 120 is a pad with compressive force, it may compress the battery cells 111 when swelling of the battery cell occurs, thereby contributing to the structural rigidity of the battery cells 111.

In addition, when the battery module 10 internally ignites, the heat barrier member 120 with heat-resistant performance may perform a thermal barrier function of blocking heat such as flame generated from the ignited battery cell 111 from moving in the stacking direction of the battery cells 111. Accordingly, heat propagation to neighboring battery cells 111 may be minimized.

The heat barrier member 120 may be disposed such that both ends thereof are inserted into the through-slots 330 of the bus-bar frames 300 when the battery cells 111 and the bus-bar frames 300 are coupled to each other, which will be explained in detail in the configuration of the flame emission blocking unit 400.

The module case 200 may have an inner space to accommodate the battery cells 111 therein. The module case 200 of the present embodiment may include a case body 210 and end plates 220 disposed on the front and rear surfaces of the case body 210.

The case body 210 may be configured in the shape of a square tube in a hollow structure having open ends O at both ends in the longitudinal direction and having an empty space therein. For example, the case body 210 may be configured in the form of a tube that has an upper surface, a lower surface, a left surface, and a right surface, and has openings formed at the front and rear ends, respectively.

In addition, the module case 200 may be formed in various other forms. For example, the module body 210 may be configured in a form in which a left plate, a right plate, and a bottom plate are integrated with each other. In this case, the integrated case part may be referred to as a "U-frame". A top plate may be welded to the top of the U-frame, thereby configuring a tubular shape. Alternatively, the module case 200 may include a box-shaped lower case in which a left plate, a right plate, a front plate, and a rear plate are integrated with each other, and an upper cover that closes the top opening of the lower case.

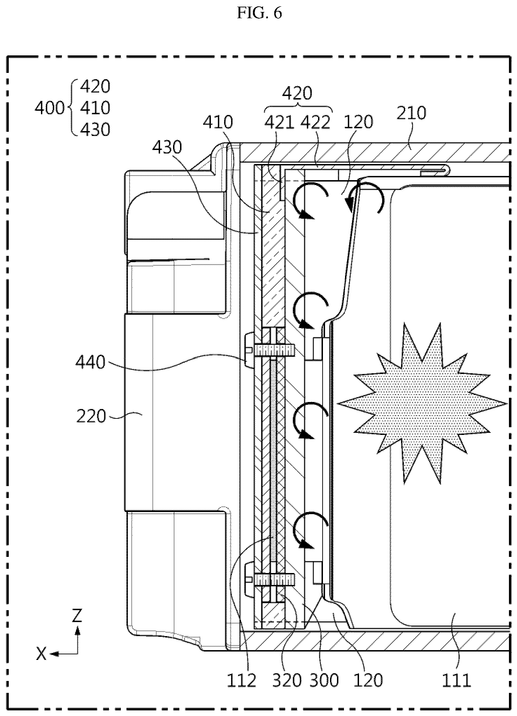

In addition, the case body 210 may be configured such that the battery cells 111 are able to be inserted thereinto in the longitudinal direction. That is, the case body 210 may be configured to insert the battery cells 111 thereinto in a sliding or press-fitting manner. For press-fitting, there may be almost no gap between the lower surface of the case body 210 and the lower end of the battery cells 111, and there may also be almost no gap between both side surfaces of the case body 210 and both sides of the battery cells 111. However, a relatively small gap may be provided between the upper surface of the case body and the top of the battery cells 111, so that an upper cover member 420 may be inserted through the small gap. In FIG. 6, the distance between the battery cells 111 and the case body is exaggerated.

This case body 210 may be made of a metal material with rigidity and heat resistance in order to physically or chemically protect the battery cells 111 contained therein.

Meanwhile, although not shown in the drawing, venting holes may be provided on the case body 210, enabling directional venting in one direction. For example, a plurality of venting holes may be formed on the lower surface of the case body, and directional venting downward of the battery module 10 may be possible through the venting holes.

The end plate 220 may be coupled to the open end O of the case body 210 such that the electrode leads 112 of the battery cells 111 and a portion where the electrode leads 112 are fixedly connected to the bus-bars 320 on the bus-bar frame 300 are not exposed to the outside. Meanwhile, although not shown in the drawings for convenience, the end plate 220 may be made of an insulating material on the inner side and a metal material on the outer side, and may be partially provided with holes or slits to expose components that need to be exposed to the outside, such as positive and negative electrode terminals or connectors of the battery module 10.

Referring to FIG. 4, the bus-bar frame 300 is configured in a plate having a size capable of covering both ends of the battery cells 111, i.e., the front (+X-axis direction) or rear (-X-axis direction) of the battery cells 111.

The bus-bar frame 300 may include a lead slot 310 through which the electrode leads 112 pass and a plurality of bus-bars 320 electrically connected to the electrode leads 112.

The bus-bar frame 300 may have a plurality of lead slots 310 through which the electrode leads 112 of the battery cells 111 may pass in the +X-axis direction or -X-axis direction, and the plurality of lead slots 310 may be provided in the stacking direction (Y-axis direction) of the battery cells 111. Accordingly, the electrode leads 112 may pass through the lead slots 310.

The bus-bar 320 may be provided between the lead slots 310. The bus-bar 320 may be made of an electrically conductive material and may be configured to be in direct contact with the electrode lead 112. For example, the bus-bar 320 may be made of a material such as copper or aluminum. In particular, the bus-bar 320 may be configured to remain in contact with the electrode leads 112 by welding or the like.

The bus-bar frame 300 may have a plurality of through-slots 330 at regular intervals corresponding to the heat barrier members 120. The heat barrier member 120 may be disposed such that both ends thereof are inserted into and pass through the through-slots 330, so that the front end of the heat barrier member 120, that is, a protrusion partition portion 121, is exposed through the surface of the bus-bar frame 300. Accordingly, the bus-bar frame 300 may have a plurality of partition surfaces 340 partitioned by the protrusion partition portions 121.

This bus-bar frame 300 may be injection-molded with an electrically insulating material. For example, the bus-bar frame 300 may be made of an electrically insulating material such as plastic to support the bus-bar 320.

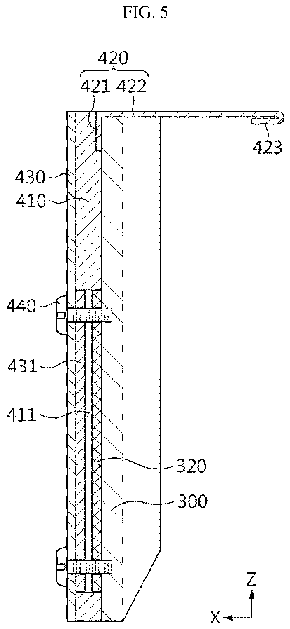

FIG. 5 is a schematically cross-sectional view of a bus-bar frame and a flame emission blocking unit in a battery module according to an embodiment of the present disclosure, and FIG. 6 is a schematically longitudinal cross-sectional view of a portion of a battery module according to an embodiment of the present disclosure.

Since the bus-bar frame 300 is usually made of an electrically insulating material, it may not be sufficient to effectively block venting gas, flame, sparks, or the like generated during thermal runaway in a specific battery cell 111. In particular, flame or the like is likely to move along the module case 200 to the open ends O of the module case 200 to vent to the front surface of the bus-bar frames 300 disposed at the front and rear surfaces of the battery cell 111 or vent through the gap between the upper surface of the module case 200 and the upper end of the bus-bar frame 300.

Accordingly, in the present embodiment, a flame emission blocking unit 400 may be provided on the bus-bar frame 300. As shown in FIGS. 4 to 6, the flame emission blocking unit 400 may be provided to be connected to the bus-bar frame 300 so as to block the front surface of the bus-bar frame 300 or the gap between the upper surface of the module case 200 and the upper end of the bus-bar frame 300.

That is, the flame emission blocking units 400 may be provided to cover the plate surfaces of the bus-bar frames 300, where the electrode leads 112 are formed, disposed on the front and rear surfaces of the battery cells 111 and the upper surface of the battery cells 111, and may be provided to block flame from being discharged in a specific direction, for example, toward the front and rear surfaces of the battery cell 111, where the electrode leads 112 are located, and/or the upper surface of the battery cell 111.

To this end, the flame emission blocking unit 400, as shown in FIGS. 2 to 6, may include: a frame cover member 410 coupled to the bus-bar frame 300 so as to face the same; an upper cover member 420 that is bent at the upper end of the bus-bar frame 300 to partially cover the upper surface of the battery cells 111; and a pressing cover block 430 for pressing and fixing the frame cover member 410 to the bus-bar frame 300.

Referring to FIGS. 4 and 5, the frame cover member 410 may be coupled to the bus-bar frame 300 to face the same. The frame cover member 410 may be coupled to the outer side of the bus-bar frame 300. The frame cover member 410 may have a lead exposure hole 411 through which the bus-bar 320 is exposed. The exposed bus-bar 320 may be electrically connected to the electrode leads 112 or a terminal.

However, although the lead exposure hole 411 may deteriorate a flame blocking function or the like, the bus-bar 320 may be fitted into the lead exposure hole 411 to cover the bus-bar 320, so that the discharge of flame or the like through the lead exposure hole 411 may be minimized.

Ultimately, the frame cover member 410 may be provided to cover the front and rear surfaces of the battery cells 111 where the electrode leads 112 are located. That is, it may be coupled to the outer side of the bus-bar frame 300 to block flame from moving to the front and rear surfaces of the battery cell 111.

To this end, the frame cover member 410 may be made of a material with low thermal conductivity and excellent heat resistance. For example, it may be made of a flame-retardant pad such as silicone or aerogel. Alternatively, it may be made of a flame-retardant mica material.

Meanwhile, there is a need to supplement the structural rigidity of the frame cover member 410, so in the present embodiment, a pressing cover block 430 may be provided. The pressing cover block 430 may press and fix the frame cover member 410 to the bus-bar frame 300. The pressing cover block 430 may be fixed to the bus-bar frame 300 by a coupling member, and may press the frame cover member 410 in this process.

The pressing cover block 430 may be provided to cover the outer surfaces of the frame cover member 410 and the bus-bar 320. This pressing cover block 430 may be made of a material with flame-retardant properties while ensuring structural rigidity. For example, the pressing cover block 430 is preferably made of SUS. In addition, an insulating layer 431 may be provided on the inner wall of the pressing cover block 430 where the bus-bar 320 is located. The insulating layer 431 is accommodated in the lead exposure hole 411 to press the bent electrode lead 112 to the bus-bar 320.

Since the pressing cover block 430 sufficiently covers the bus-bar 320, as well as the frame cover member 410, the frame cover member 410 made of a flame-retardant material may effectively support the bus-bar frame 300 when flame or the like is ejected directly to the front and rear surfaces of the battery cells 111 by passing the bus-bar frame 300, may withstand internal pressure, and may block the flame from being discharged toward the front and rear surfaces of the battery cells 111.

Referring to FIG. 6, when a thermal event occurs in a specific battery cell 111, flame or the like is ejected toward the end plate (in the X-axis direction), and in this process, the frame cover member 410 pressed and fixed to the bus-bar frame 300 by the pressing cover block 430 may block flame progression, thereby preventing the flame from being discharged to the front surface of the battery cells 111.

Meanwhile, referring to FIG. 4, as the heat barrier member 120 is coupled to the bus-bar frame 300, the front end of the heat barrier member 120 may protrude outward from the plate surface of the bus-bar frame 300, thereby forming a protrusion partition portion 121. The bus-bar frame 300 may have a plurality of partition surfaces 340 partitioned by the protrusion partition portions 121.

In the present embodiment, the frame cover member 410 and the pressing cover block 430 may be separated from each other and respectively provided to each partition surface 340. Accordingly, when a thermal event occurs in a specific battery cell 111, the frame cover member 410 and pressing cover block 430 corresponding to the battery cell 111 may perform a local flame blocking function, so that adverse effects caused by the flame may be minimized in other separated frame cover members 410 and pressing cover blocks 430.

The upper cover member 420 may be bent at the upper end of the bus-bar frame 300 toward the center of the battery cells 111. Referring to FIG. 5, the upper cover member 420 may include: a coupling surface 421 disposed in parallel to the plate surface of the bus-bar frame 300 and coupled to the bus-bar frame 300; and a bent surface 422 bent from the coupling surface 421 and disposed on the edge of the upper surface of the battery cells 111.

The coupling surface 421 may be coupled to the plate surface of the bus-bar frame 300. In the drawing, although the coupling surface 421 is shown to be coupled to slightly protrude from the surface of the bus-bar frame 300, the upper surface of the bus-bar frame 300 may be depressed and stepped by a depth corresponding to the thickness of the coupling surface 421, so that the coupling surface 421 may be coupled to the stepped portion such that the outer surface of the coupling surface 421 is substantially the same as the surface of the bus-bar frame 300. The coupling surface 421 may serve to fix the upper cover member 420 to the bus-bar frame 300.

The bent surface 422 may be bent from the coupling surface 421 and disposed on the edge of the upper surface of the battery cells 111. A folded reinforcement portion 423 may be provided at the end of the bent surface 422, securing rigidity.

This upper cover member 420 may be made of the same material, i.e., SUS, as the pressing cover block 430 to withstand emission of flame and the like. That is, referring to FIG. 6, when a thermal event occurs and flame is generated in a specific battery cell 111, some of the flame may rise to the top of the battery cell 111 and then move to the open end O. Therefore, the upper cover member 420 disposed in the gap between the upper part of the bus-bar frame 300 and the case body may partially reinforce both upper sides of the battery cells 111, thereby preventing flame or the like from being discharged through the above gap. As a result, flame may be blocked from moving to the left side of the upper cover member 420, thereby minimizing thermal damage to the components at both ends of the battery module 10 and the end plates.

According to this implemented configuration, it is possible to block flame or the like generated during a thermal event from being discharged toward the front and rear surfaces of battery cells 111, where the electrode leads 112 are located, and/or the upper surface of the battery cells 111, thereby minimizing thermal damage to the components at both ends of the battery module 10 and the end plates 220 and preventing structural collapse.

In addition, this implemented configuration, it is possible to maximally delay thermal accumulation or thermal runaway to adjacent battery modules 10 by performing directional venting to control the blocked flame or the like to be discharged in a specific direction (e.g., downward) inside the battery module 10.

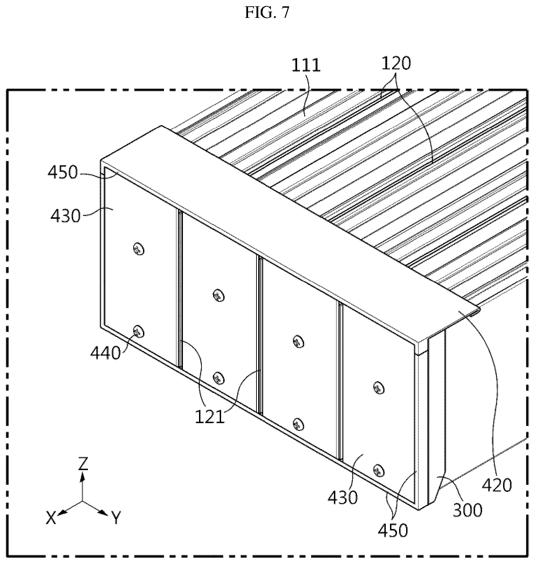

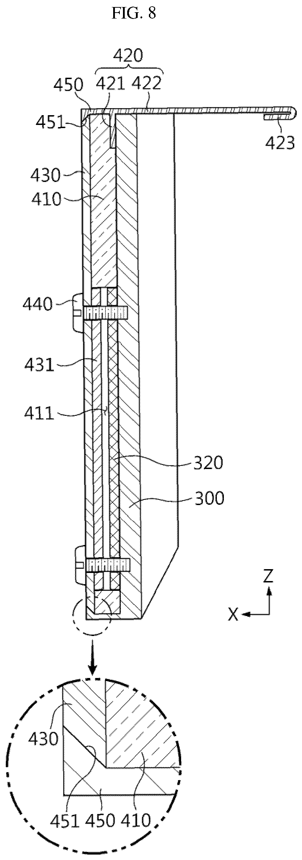

Next, other embodiments of the battery module 10 of the present disclosure will be briefly described with reference to FIGS. 7 and 8.

FIG. 7 is a perspective view schematically illustrating a bus-bar frame according to another embodiment of the present disclosure, and FIG. 8 is a longitudinal cross-sectional view of a bus-bar frame and a flame emission blocking unit according to another embodiment of the present disclosure.

The same reference numbers as in the previous drawings indicate the same members, and redundant descriptions of the same members will be omitted and the description will focus on the differences from the above-described embodiment.

Compared to the above-described embodiment, the battery module 10 according to another embodiment of the present disclosure is provided with an additional configuration of the bus-bar frame 300. That is, as shown in FIGS. 7 and 8, the bus-bar frame 300 may include a holder portion 450 that protrudes outward from the edge of the partition surface 340 to facilitate coupling between the frame cover member 410 and the pressing cover block 430.

Referring to FIG. 8, the holder portion 450 may be provided along the outer perimeter of the bus-bar frame 300. The holder portion 450 may be configured to protrude from the outer surface of the bus-bar frame 300 toward the front surface of the battery cell 111 (in the X-axis direction), and the frame cover member 410 may be received inside the same. In addition, the pressing cover block 430 may be press-fitted to the holder portion 450. In addition, in order to maximize the coupling force of press-fitting, an inclined portion 451 may be formed on the inner wall of the holder portion 450. As a result, the pressing cover block 430 may be more firmly coupled to the holder portion 450, thereby improving the fixing force for pressing the frame cover member 410 of the pressing cover block 430. Accordingly, flame or the like generated during a thermal event may be more completely blocked from moving to the front and rear surfaces of the battery cells 111 where the electrode leads 112 are located.

According to this implemented configuration, it is possible to block flame or the like generated during a thermal event from being discharged toward the front and rear of battery cells 111, where the electrode leads 112 are located, and/or the top of the battery cells 111, thereby minimizing thermal damage to the components at both ends of the battery module 10 and the end plates 220 and preventing structural collapse.

In addition, this implemented configuration, it is possible to maximally delay thermal accumulation or thermal runaway to adjacent battery modules 10 by performing directional venting to control the blocked flame or the like to be discharged in a specific direction (e.g., downward) inside the battery module 10.

The flame emission blocking unit 400 of a battery module 10 according to another embodiment of the present disclosure may be provided with a reinforcement structure portion 460.

The reinforcement structure portion 460 is designed to improve the structural rigidity of the flame emission blocking unit 400, and is especially intended to withstand lateral pressure or shear stress (pressure of flame generated when a thermal event occurs) applied to the plate surface. To this end, the reinforcement structure portion 460 in the form of a protruding or recessed rib may be provided on the plate surface of the pressing cover block 430 and the plate surface of the upper cover member 420.

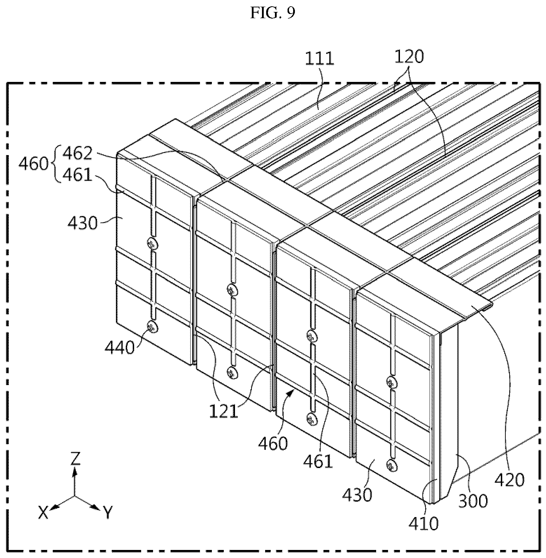

Referring to FIG. 9, the reinforcement structure portion 460 may include: a protrusion rib 461 provided on the pressing cover block 430; and a recess rib 462 provided on the upper cover member 420.

Here, the configurations of the protrusion rib 461 and the recess rib 462 are arbitrarily selected, and the arrangement positions, the rib shapes, and the number of the reinforcement structure portions 460 may vary as long as lateral pressure resistance may be increased.

According to this implemented configuration, it is possible to block flame or the like generated during a thermal event from being discharged toward the front and rear of battery cells 111, where the electrode leads 112 are located, and/or the top of the battery cells 111, thereby minimizing thermal damage to the components at both ends of the battery module 10 and the end plates 220 and preventing structural collapse.

In addition, this implemented configuration, it is possible to maximally delay thermal accumulation or thermal runaway to adjacent battery modules 10 by performing directional venting to control the blocked flame or the like to be discharged in a specific direction (e.g., downward) inside the battery module 10.

Meanwhile, a battery pack (not shown) according to the present disclosure may include one or more battery modules described above.

The battery pack according to the present disclosure may further include a master BMS (Battery Management System) for integrated control of charging and discharging of one or more battery modules, a current sensor, a fuse, or the like, and may include a pack case for accommodating the above-mentioned components.

The battery pack according to the present disclosure may be applied to energy storage devices or to vehicles such as electric scooters, electric vehicles, or hybrid vehicles.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

Meanwhile, although terms indicating directions such as upward, downward, left, right, forward, and backward directions are used in this specification, it is obvious to those skilled in the art that these terms are only for convenience of explanation and may vary depending on the location of the target object or the location of the observer.

## Claims

1. A battery module comprising:
a module case;
a plurality of battery cells accommodated inside the module case and arranged to be stacked in one direction;
a bus-bar frame configured to support a bus-bar connected to electrode leads of the battery cells; and
a flame emission blocking unit connected to the bus-bar frame and disposed on a plate surface of the bus-bar frame and an upper surface of the battery cells so as to block flame from being discharged to a front and rear surfaces of the battery cells, where the electrode leads are located, and/or the upper surface of the battery cells.

2. The battery module according to claim 1,
wherein the flame emission blocking unit comprises:
a frame cover member coupled to the bus-bar frame so as to face the same; and
an upper cover member formed to be bent at the upper end of the bus-bar frame and configured to partially cover the upper surface of the battery cells.

3. The battery module according to claim 2,
wherein the flame emission blocking unit further comprises a pressing cover block configured to press and fix the frame cover member to the bus-bar frame.

4. The battery module according to claim 3,
further comprising a heat barrier member provided between at least one or more battery cells in a stacking direction of the battery cells.

5. The battery module according to claim 4,
wherein the bus-bar frame has a plurality of through-slots formed at regular intervals corresponding to the heat barrier members, and
wherein the bus-bar frame is coupled to the battery cells such that both ends of the heat barrier member are inserted into the through-slots.

6. The battery module according to claim 5,
wherein a tip of the heat barrier member is inserted into the bus-bar frame to form a protrusion partition portion protruding outward from the plate surface of the bus-bar frame,
wherein the bus-bar frame has a plurality of partition surfaces partitioned by the protrusion partition portions, and
wherein the frame cover member and the pressing cover block are separated from each other and respectively provided to each of the partition surface.

7. The battery module according to claim 2,
wherein the upper cover member comprises:
a coupling surface disposed in parallel to the plate surface of the bus-bar frame and coupled to the bus-bar frame; and
a bent surface bent from the coupling surface to be disposed on an edge of the upper surface of the battery cells.

8. The battery module according to claim 7,
wherein a folded reinforcement portion is provided at an end of the bent surface.

9. The battery module according to claim 3,
wherein the frame cover member is a flame-retardant pad made of silicone or aerogel, and
wherein the upper cover member and the pressing cover block are made of SUS.

10. The battery module according to claim 9,
wherein the frame cover member has a lead exposure hole through which the bus-bar is exposed to the outside, and
wherein an insulating layer is coupled to the inner wall of the pressing cover block at a position corresponding to the lead exposure hole.

11. The battery module according to claim 6,
wherein the bus-bar frame comprises a holder portion configured to protrude outward from the edge of the partition surface to facilitate coupling between the frame cover member and the pressing cover block.

12. The battery module according to claim 11,
wherein the pressing cover block is press-fitted to the holder portion.

13. The battery module according to claim 12,
wherein an inclined portion is formed on the inner wall of the holder portion for press-fitting.

14. The battery module according to claim 3,
wherein at least one reinforcement structure portion is provided on a surface of the flame emission blocking unit, and
wherein the reinforcement structure portion comprises:
a protrusion rib provided on the pressing cover block; and
a recess rib provided on the upper cover member.

15. A battery pack comprising the battery module according to any one of claims 1 to 14.
